Europäisches Patentamt

European Patent Office

Office européen des brevets

(11) Publication number: **0 577 159 A1**

# EUROPEAN PATENT APPLICATION

(21) Application number: **93200866.7**

(22) Date of filing: **25.03.93**

(51) Int. Cl.5: **G01M 1/28**

(30) Priority: **29.06.92 US 905798**

(43) Date of publication of application:
**05.01.94 Bulletin 94/01**

(84) Designated Contracting States:
**DE FR GB NL SE**

(71) Applicant: **THE BOEING COMPANY**
**P.O. Box 3707**
**M.S. 6Y-25**
**Seattle WA 98124-2207(US)**

(72) Inventor: **Ghassaei, Saeid**
**3810 East McGilvra Street**
**Seattle, WA 98112(US)**

(74) Representative: **Hoijtink, Reinoud et al**
**OCTROOIBUREAU ARNOLD & SIEDSMA**
**Sweelinckplein 1**
**NL-2517 GK Den Haag (NL)**

(54) Onboard aircraft engine balancing data gathering and analysis system.

(57) An apparatus for gathering vibrational data from a jet engine (101) while in-flight is disclosed. A plurality of accelerometers(119 and 121) are located on the jet engines. Each of the accelerometers provide an acceleration signal. A tachometer (117) is placed on the jet engines and provides a rotation signal indicative of the rotational speed of the low speed shaft (103). An airborne vibration monitor (11) receives the signals produced by the accelerometers and tachometer and stores the signals in memory. Based upon the signals obtained from the accelerometers and tachometer, the airborne vibration monitor may calculate the optimum balance solution for the jet engine.

FIG.3.

Field of the Invention

The present invention relates to engine balancing, and more particularly, to an apparatus for gathering aircraft engine vibration data during in-flight aircraft operation and analyzing the gathered data.

Background of the Invention

Most modern commercial aircraft utilize high-bypass jet engines that have a large number of rotating elements. The rotating elements can be grouped according to their relative speed of rotation, with some of the rotating elements forming a low speed rotating system and some of the rotating elements forming a high speed rotating system. During in-flight operation, both the low speed rotating system and the high speed rotating system can be a source of unwanted engine vibration. The engine vibration is typically caused by an imbalance in the rotating systems. The reduction of engine vibration is important for a variety of reasons. For example, during in-flight operation, engine vibration may result in excessive cabin noise and vibration. The cabin noise and vibration may in turn cause passenger and crew discomfort. In addition to cabin noise and vibration, engine vibration can significantly reduce engine life and increase engine maintenance costs.

In order to reduce engine vibration, airplane and engine manufacturers have adopted a number of solutions, including damped rotor bearings and vibration isolators. The technique of using damped rotor bearings involves encasing a rotating element of a rotating system, such as a shaft bearing, in a high viscosity fluid. The fluid tends to dampen the vibrations produced by the rotating element. The technique of using vibration isolators involves placing shock absorbers at those locations where the aircraft engine is attached to the aircraft wing or body. However, both of these techniques do not treat the cause of engine vibration, but rather lessens the effect of engine vibration on the passenger compartment. One technique that does treat the cause of engine vibration, i.e. the engine imbalance, is to balance the rotating systems of the aircraft engine on a regular basis.

The technique of engine balancing is well known in the art and involves the attaching of weights at specific locations on the rotating system. In many respects, the balancing of a high-bypass jet engine is analogous to the balancing done on an automobile tire prior to mounting on an automobile. Placing weights of specific mass at specific locations considerably reduces engine vibration. The specification of the locations and weights to be applied to the rotating system in order to balance the rotating system is referred to as a balance solution.

In order to determine the balance solution, it is first necessary to obtain vibration data. Vibration data is a measure of the amount of vibration the engine is experiencing as the engine is operated at various speeds. Prior to the present invention, vibration data was gathered at an engine balancing facility on the ground. Gathering engine balancing data on the ground is extremely inconvenient and costly. More specifically, in order to optimally balance an engine, vibration data must be gathered when the engine is operating at or near full operating power. The noise generated by the engines often requires that the vibration data by gathered only in designated areas. Moreover, it is not uncommon to consume thousands of pounds of fuel during a single vibration data gathering run and expend many man-hours to conduct on-ground vibration data gathering. Further, a ground based data acquisition system is required for recording the vibration data from the engine during the ground run. Lastly, and perhaps most significantly, the cost of having a jet aircraft out of service while the engines are being balanced is extremely high.

The present invention reduces the cost and inconvenience of engine balancing by providing a method and system for in-flight engine vibration data acquisition and analysis.

Summary of the Invention

The present invention includes a plurality of accelerometers disposed on an aircraft engine, an engine tachometer, an airborne vibration monitor, and an on-board maintenance system. Each accelerometer provides an acceleration signal to the airborne vibration monitor. The acceleration signal is indicative of the amount of acceleration experienced by the accelerometer. The tachometer provides a rotation speed signal to the airborne vibration monitor. The rotation speed signal is indicative of the rotational speed of the low pressure shaft of the engine.

In operation, during in-flight operation of the engines, when the low pressure shaft of the engine is rotating at a predetermined engine speed, the acceleration signals and the rotation speed signal are processed by the airborne vibration monitor to provide vibration signals that include a magnitude component and a phase component. The airborne vibration monitor stores the vibration signals in memory.

In accordance with other aspects of the present invention, a microprocessor is provided in the airborne vibration monitor. The microprocessor calculates a balance solution based on the vibration signals. The balance solution sets forth the precise mass and location of weights that are to be applied to the engine for optimum engine balancing.

In accordance with other aspects of the present invention, the airborne vibration monitor provides the vibration signals and balance solution to an on-board maintenance system (OMS). The OMS includes a display providing the vibration signals and balance solution to an aircraft technician for implementation.

Brief Description of the Drawings

The foregoing aspects and many of the attendant advantages of this invention will become more readily appreciated as the same becomes better understood by reference to the following detailed description when taken in conjunction with the accompanying drawings, wherein:

FIGURE 1 is a side cutaway schematic diagram of a typical high-bypass jet engine;

FIGURE 2 is a front view of the jet engine of FIGURE 1;

FIGURE 3 is a schematic diagram of an embodiment of the present invention;

FIGURE 4 is a schematic diagram of a signal conditioning unit suitable for use in the embodiment of the invention illustrated in FIGURE 3;

FIGURE 5 is a flow chart illustrating part of the operation of the microprocessor portion of the embodiment of the present invention illustrated in FIGURE 3;

FIGURE 6 is a table illustrating the type of vibration signals acquired by the present invention;

FIGURE 7 is a table illustrating a balance solution of the type provided by the present invention; and

FIGURE 8 illustrates an alternative embodiment of the present invention.

Detailed Description of the Preferred Embodiment

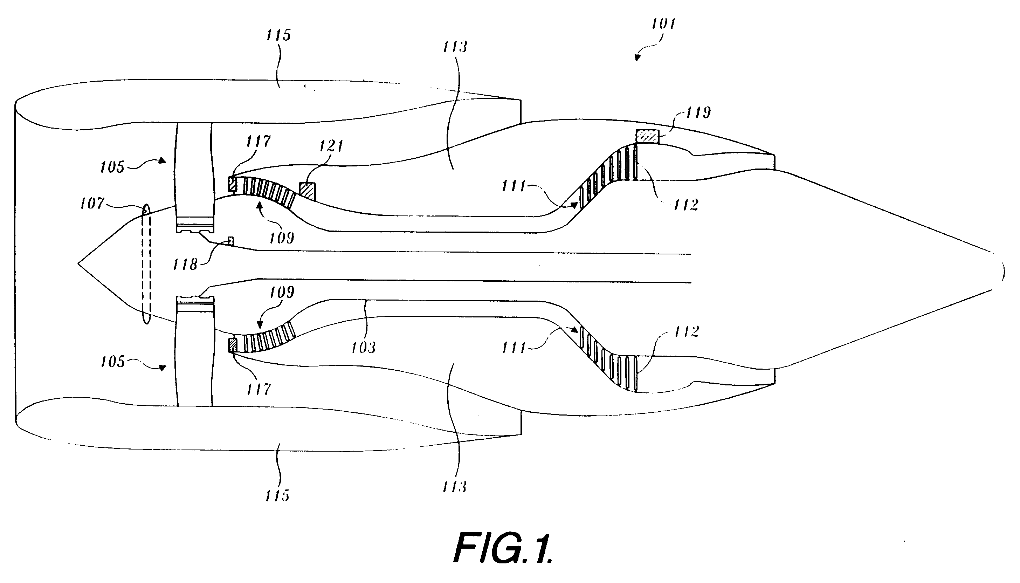

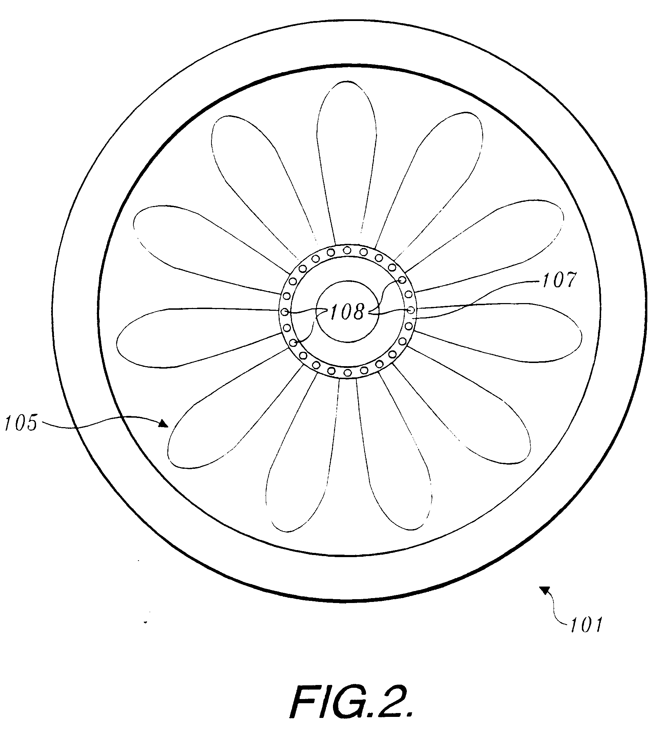

As seen in FIGURES 1 and 2, a high-bypass jet engine 101 includes a low speed rotating system comprising a low speed shaft 103, a fan 105, a fan balance ring 107, a low pressure compressor 109 and a low pressure turbine 111. Engine 101 also includes a high speed rotating system that is not shown. The present invention is concerned only with the low pressure rotating system. The fan balance ring 107 is disposed near the most forward portion of the low speed shaft 103 and is mounted thereto. The fan balance ring 107 is circular and includes a plurality of holes 108 along its circumference. As will be seen below, the holes 108 are receptacles for balance weights. Thus, the function of fan balance ring 107 is to receive balance weights that aid in balancing the low speed portion of the engine.

Fan 105 is disposed immediately behind the fan balance ring 107 and is comprised of a plurality of substantially identical blades that radiate from the low speed shaft 103 at equal radial intervals. The individual blades that comprise fan 105 are fixedly secured to low speed shaft 103. Disposed behind the fan 105 is the low pressure compressor 109. Low pressure compressor 109 consists of a plurality of fans disposed adjacent one another and fixedly connected to the low speed shaft 103. Disposed near the backward portion of low speed shaft 103 is the low pressure turbine 111. Low pressure turbine 111 consists of a plurality of sets of blades disposed adjacent one another and fixedly connected to the low speed shaft 103. The last set of blades 112 of low pressure turbine 111, like the fan balance ring 107, is adapted with receptacles to accept balance weights. Because fan balance ring 107, fan 105, low pressure compressor 109, and low pressure turbine 111 are all connected to low speed shaft 103, all these components rotate at the same speed as low speed shaft 103.

An engine casing 113 of generally tubular shape is disposed circumferentially about low pressure shaft 103, extending from low pressure compressor 109 backward past low pressure turbine 111. The engine casing 113 surrounds that portion of the engine that is behind fan 105. Furthermore, an engine nacelle 115 of generally tubular shape is disposed circumferentially about the fan 105, balance ring 107, and engine casing 113, extending from the fan 105 backwards nearly to low pressure turbine 111. Disposed at the forward portion of the engine casing 113 is a tachometer 117. The tachometer 117 provides a rotation signal that is indicative of the rotational speed of the low speed shaft 103. Tachometer 117 operates by detecting the passing of a magnetic marker 118 affixed to low speed shaft 103. As the low speed shaft 103 rotates, magnetic marker 118 passes beneath the tachometer 117 once every revolution. The tachometer 117 detects the magnetic marker 118 as it passes underneath the tachometer 117 to provide the rotation signal. The rotation signal is thus a train of pulses having a frequency indicative of the rotational speed of low speed shaft 103. As will be seen in greater detail below, the rotation signal is processed to provide an indication of the rotational speed of low speed shaft 103 in revolutions per minute (RPM). In particular, the speed of low speed shaft 103 in RPM is sixty (60) times the frequency of the rotations signal in Hertz.

Furthermore, disposed on the rear portion of engine casing 113 and directly above the last set of blades 112 of the low pressure turbine 111 is a rear accelerometer 119. The rear accelerometer 119 provides a rear acceleration signal that is indicative of the acceleration of the engine casing 113 at the location where the rear accelerometer 119 is mounted. Further, disposed near the forward portion of engine casing 113 and directly above the low pressure compressor 109 is a forward accelerometer 121. The forward accelerometer 121 provides a front acceleration signal that is indicative of the acceleration of the engine casing 113 at the location where the forward accelerometer 121 is mounted. The operation of accelerometers of the type described above are well known in the art and, for further information, the reader is directed to E.O. Doebelin, *Measurement Systems Application and Design* § 4.8 (3rd Ed. 1983) published by McGraw-Hill.

The high-bypass jet engine described above is known in the art. Most modem high-bypass jet engines include all of the components described above, including the tachometer 117, the rear accelerometer 119, and forward accelerometer 121. For example, the model GE90 engine manufactured by General Electric, the model PW4084 engine manufactured by Pratt & Whitney, and the model Trent 800 engine manufactured by Rolls Royce all include a tachometer 117, a rear accelerometer 119, and a front accelerometer 121. The accelerometers are provided by the aircraft manufacturers for use primarily as warning devices. For example, the signals produced by the accelerometers are typically provided to the Engine Indicator and Crew Alerting System (EICAS) of an airplane. The EICAS system alerts the crew of an engine malfunction if excessive vibration occurs. The present invention "taps into" the signals normally provided to the EICAS system and utilizes the information for engine balancing purposes. While a detailed understanding of the operation of high-bypass jet engines is not necessary for an understanding of the present invention, the previous discussion is provided to make the invention more easily understood.

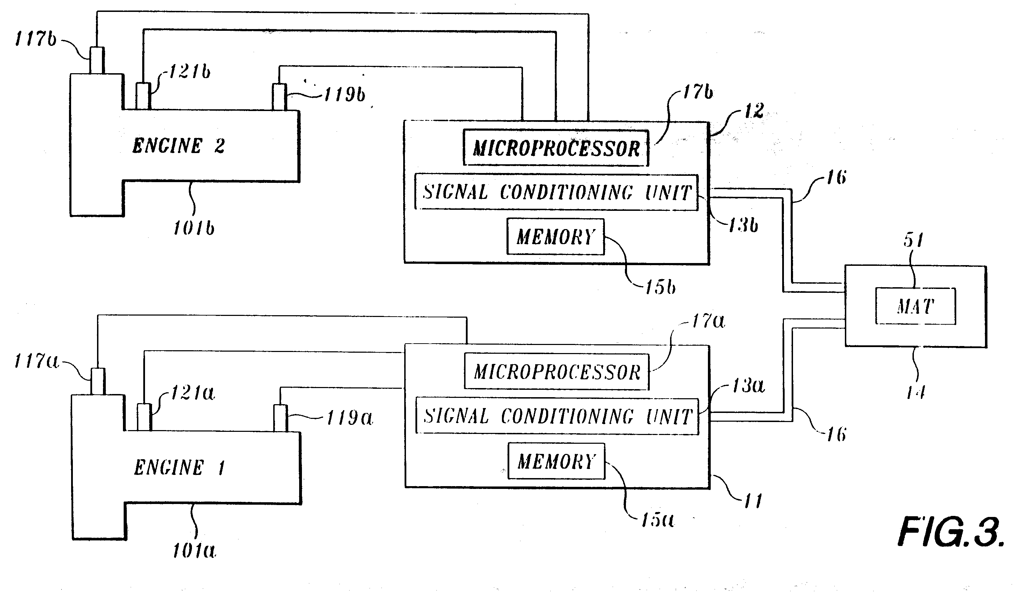

Turning next to FIGURE 3, embodiments of the present invention include an airborne vibration monitor for each engine of the aircraft. Thus, in the case of a two engine aircraft, such as the Boeing 777, the invention comprises a first airborne vibration monitor 11, a second airborne vibration monitor 12, and an on-board maintenance system (OMS) 14. All of these components are located on-board the jet aircraft. As just noted, in the case of other aircraft with additional engines, additional airborne vibration monitors may be used. Alternatively, it has also been found that a single airborne vibration monitor may be shared and used to monitor multiple engines.

The engines 101a and 101b schematically illustrated in FIGURE 3 are assumed for the purposes of this description to be similar to the engine described in FIGURES 1 and 2. For clarity, like reference numerals in FIGURES 1, 2 and 3 refer to like elements. For example, rear accelerometers 119a and 119b of FIGURE 3 correspond to rear accelerometer 119 of FIGURE 1. Moreover, the first airborne vibration monitor 11 and the second airborne vibration monitor 12 are identical in configuration and operation. Thus, only a detailed description of the configuration and operation of the first airborne vibration monitor 11 will be provided, it being understood that the operation of second airborne vibration monitor 12 is identical.

First airborne vibration monitor 11 comprises a signal conditioning unit 13a, memory 15a, and microprocessor 17a. First airborne vibration monitor 11 is communicatively connected to engine 101a and receives therefrom three inputs: the signals produced by rear accelerometer 119a, front accelerometer 121a, and tachometer 117a. As noted earlier, tachometer 117a provides a rotation signal that is indicative of the rotational speed of low speed shaft 103a and rear and front accelerometers 119a and 121a provide rear and front acceleration signals, respectively, that are indicative of the acceleration of the casing and nacelle upon which the accelerometers are mounted. The rear and front acceleration signals are also generally referred to as vibration data. All of these signals are provided to signal conditioning unit 13a. Thus, the rotation signal, rear acceleration signal, and front acceleration signals are only produced when the engines are operating.

The signal conditioning unit 13a acts as the signal processing component of the airborne vibration monitor. In particular, the signal conditioning unit 13a is operative to process the rear acceleration signal provided by rear accelerometer 119a into a rear displacement signal. Whereas the rear acceleration signal indicates the acceleration of the accelerometer, the rear displacement signal indicates the positional displacement of the accelerometer, thus providing a direct indication of the level of vibration. Similarly, the signal conditioning unit 13a transforms the front acceleration signal provided by front accelerometer 121a into a front displacement signal indicative of the level of vibration of front accelerometer 121a. Further, signal conditioning unit 13a also processes the rotation signal from tachometer 117a to provide a rotational speed signal indicative of the rotational speed of low speed shaft in RPM.

Lastly, signal conditioning unit 13a utilizes the rear displacement signal along with the rotation signal to provide a rear vibration signal having a magnitude component and a phase component. The magnitude component is an indication of the magnitude of vibration and the phase component is an indication of the time lag or time lead of the vibration referenced to the position of magnetic marker 118 on low speed shaft 103a. Similarly, signal conditioning unit 13a also utilizes the front displacement signal along with the rotation speed signal to provide a front vibration signal having a magnitude component and a phase component.

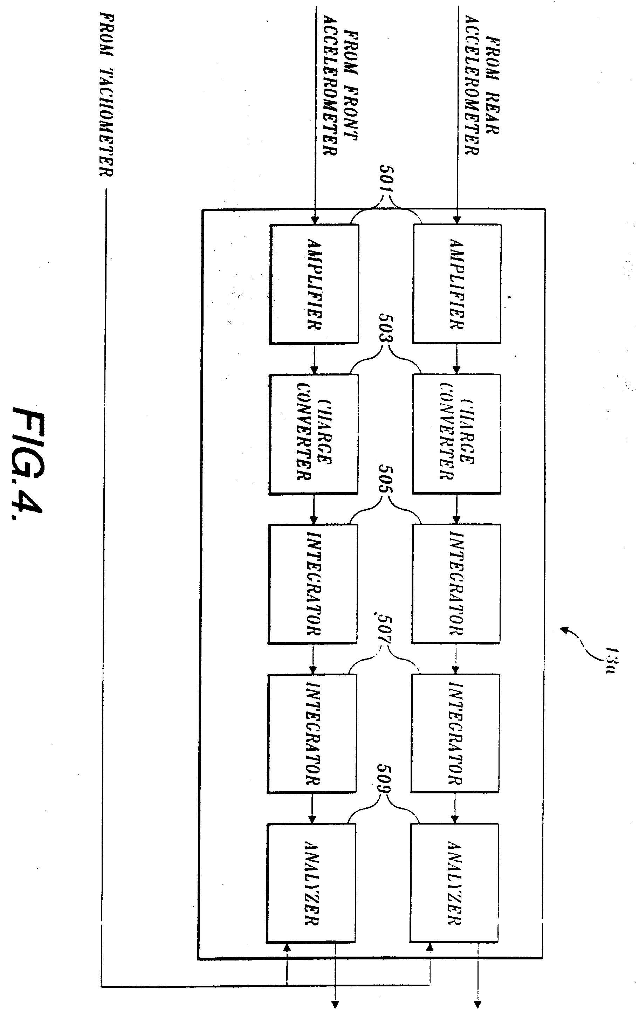

Referring to FIGURE 4, the signal conditioning unit 13a is shown. Signal conditioning unit 13a comprises amplifiers 501, charge converters 503, first integrators 505, second integrators 507, and analyzers 509. As depicted in FIGURE 4, the rear vibration signal and the front vibration signal follow parallel paths through identical components of signal conditioning unit 13a. Thus, only a description of the signal processing performed by the signal conditioning unit 13a on the rear acceleration signal will be given; it being understood that the signal processing on the front acceleration signal is identical.

The rear acceleration signal is provided to amplifier 501 which amplifies the signal. Typically, the accelerometers used to measure vibration in jet engines, such as those found in the GE90, PW4084, and Trent 800, provide an acceleration signal in the form of an electrical charge. The level of electrical charge is indicative of the amount of acceleration the accelerometer is undergoing. Thus, amplifier 501 acts to amplify the electrical charge. The amplified signals are provided to charge converter 503 which converts the rear acceleration signal from an electrical charge into a voltage signal.

As noted above, accelerometers 119a and 121a provide a signal indicative of acceleration. In order to obtain the displacement signals, the acceleration signals must by integrated twice by first integrator 505 and second integrator 507. As can be appreciated by those skilled in the art, integrating an acceleration signal twice provides a displacement signal. Thus, the rear displacement signal exiting from second integrator 507 is an indication of the positional displacement of the rear accelerometer. The rear displacement signal and the rotation speed signal from tachometer 117a are input into analyzer 509. Analyzer 509 processes the signals to provide the rear vibration signal and the rotational speed of the pressure shaft 103 in RPM. As noted above, the rear vibration signal has a magnitude and a phase. Because the vibration signal is comprised of a magnitude portion and a phase portion, the vibration signal can be thought of as a vector. The operation of the analyzer 509 to convert the rear displacement signal and rotational signal into a rear vibration signal is well known in the art. In one actual embodiment, the analyzer 509 is an HP 3562 spectrum analyzer manufactured by Hewlett-Packard Corp.

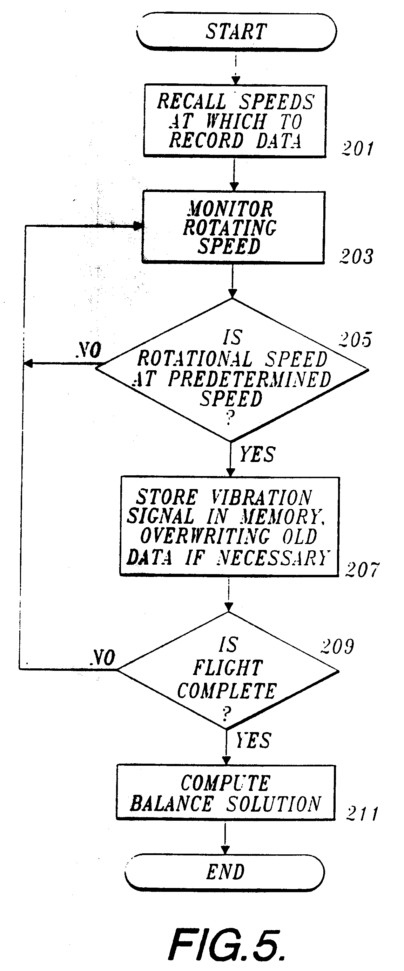

As noted above and shown in FIGURE 3, the airborne vibration monitor 11 includes a microprocessor 17a and memory 15a. The output of the analyzer 509 is provided to microprocessor 17a. As seen in greater detail below, microprocessor 17a stores in memory 15a the output of signal conditioning unit 13 when the rotational speed of low speed shaft 103 is within predetermined ranges. Referring to FIGURE 5, a flow chart illustrating the operation of microprocessor 17a in storing the vibration signals produced by signal conditioning unit 13a is shown. First, at a box 201, the microprocessor recalls the predetermined rotational speeds, referred to as target rotational speeds, at which microprocessor 17a is to record vibration data. As will be appreciated by those skilled in the art, vibration signals must be obtained for several rotational speeds in order to balance an engine properly. The rotational speeds are predetermined and somewhat arbitary. In one actual embodiment, the rotational speeds are fifty (50), sixty (60), seventy (70), eighty (80), ninety (90) and one-hundred (100) percent of the rotational speed of low speed shaft 103 when the engine is operated at full power. For example, if the rotational speed of low speed shaft 103 of a particular engine at full power is ten-thousand RPM, microprocessor 17a would record the vibration signals when the rotational speed signal as provided by the signal conditioning unit 13a is at five-thousand, six-thousand, seven-thousand, eight-thousand, nine-thousand, and ten-thousand RPM.

Next, at a box 203, microprocessor 17a continually monitors the rotational speed of low speed shaft 103, via the rotational speed signal output by signal conditioning unit 13a. At a box 205, if the low speed shaft 103 of engine 101a is operating at a speed not within a predetermined range from a target rotational speed, the data from signal conditioning unit 13a is not recorded. In those cases, the microprocessor 17a of airborne vibration monitor 11 continues to monitor the output from signal conditioning unit 13a for the rotational speed of low speed shaft 103.

If, however, at box 205, the rotational speed signal output is within a predetermined range from a target rotational speed, the vibration signals output by signal conditioning unit 13a are stored in memory 15a at box 207. In this manner, vibration signals from the signal conditioning unit 13a may be recorded only when the low speed shaft 103 of engine 101a is operating at a predetermined rotational speed. Furthermore, if during a flight the rotational speed of low speed shaft 103 operates within a predetermined range from a target rotational speed multiple times, the most recent vibration signals provided by signal conditioning unit 13a are retained. Thus, microprocessor 17a overwrites the previously stored vibration data for that particular target rotational speed.

After the vibration signals are stored at box 207, a check is make at a box 209 to determine if the aircraft flight is complete. If the flight is not complete, the microprocessor 17a of airborne vibration monitor 11 continues to monitor the output from signal conditioning unit 13a at box 203 for the rotational speed of low speed shaft 103. However, if the flight is complete, at a box 211, a balance solution is calculated by microprocessor 17a in accordance with known techniques. The final set of vibration signals that is recorded in memory 15 may then be used to determine the position and amount of weight required to balance the engine.

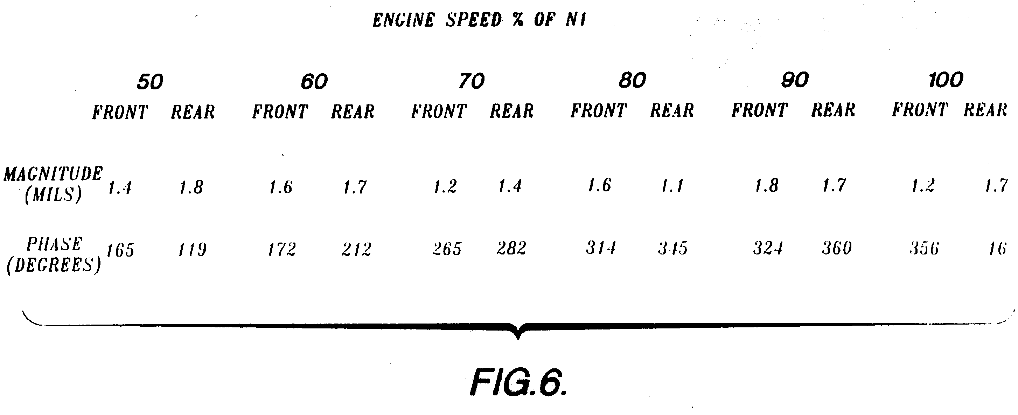

FIGURE 6 illustrates in table format typical vibration signals recorded during operation of the present invention. Six main columns are shown along the top of the table. Each column corresponds to a predetermined target rotational speed as a percentage of rotational speed at full power (denoted N1). Further, two sub-columns under each main column identify the front vibration signal and the rear vibration signal. Under each sub-column is the actual vibration signal, including a magnitude component and a phase component. In the example shown in FIGURE 6, when the rotational speed is at its full power value, the front vibration signal has a magnitude of 1.2 mils (one-thousand "mils" is equivalent to one inch) and a phase of 356 degrees, while the rear vibration signal has a magnitude of 1.7 mils and a phase of 16 degrees.

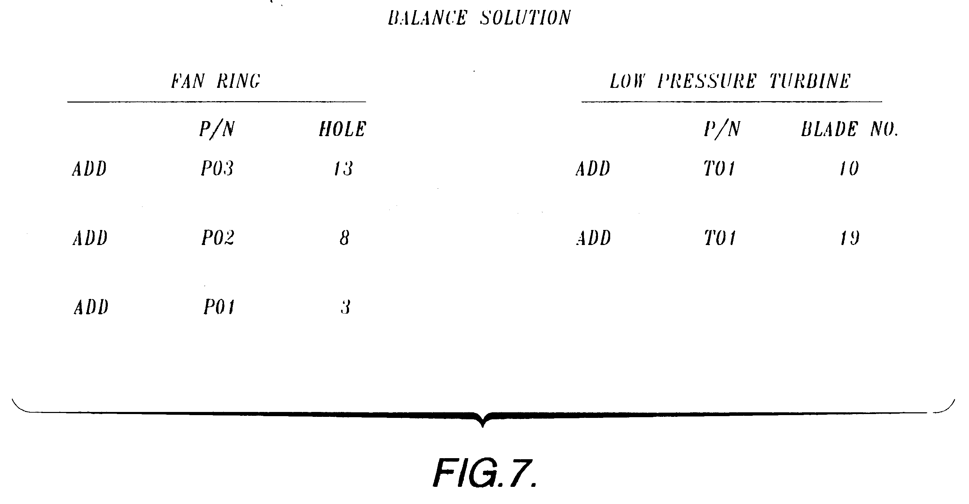

The vibration signals presented in FIGURE 6 can be used to calculate a balance solution. As noted above, a balance solution is the specification of locations and masses of weights to be added to fan balance ring 107 and/or the last set of blades 112 of low pressure turbine 111. FIGURE 7 illustrates a typical balance solution. The balance solution of FIGURE 7 includes specifications for the addition of weights to both the fan balance ring 107 and the last set of blades 112 of low pressure turbine 111. With respect to the fan balance ring, two sub-columns labeled "P/N" and "Hole" indicate the specific part to be added and the location on the fan ring to add the part, respectively. Specifically, in the example illustrated in FIGURE 7, the part designations under the "P/N" column are specific part numbers used for balancing engines manufactured by General Electric. However, for other engine manufacturers, it can be appreciated that other part designations would be required.

As seen in FIGURE 7, the balance solution dictates that a part "P03" is to be added to hole 13 of the fan balance ring. Similarly a part "P02" is to be added to hole 8 and a part "P01" is to be added to hole 3 of the fan balance ring. With respect to the low pressure turbine 111, two sub-columns "P/N" and "Blade No." indicate the part to be added and onto which blade the part is to be added, respectively. In particular, a part "T01" is to be added to blade 10 and a part "T01" is to be added to blade 19 of the last set of blades 112. As with the fan balance ring, the part designations of "T01" are specific to engines manufactured by General Electric. Other part designations would be used for engines provided by other manufactures.

Methods of utilizing the front and rear vibration signals of FIGURE 6 to calculate a balance solution are well known in the art. For example, in the preferred embodiment, the balance solution is formulated via the "exhaustive search method". This method calculates a theoretical vibration measure for all possible combination of weights located at various positions on the fan balance ring 107 and on the last set of blades 112. In this method, the values of $R_F$ and $R_R$ in Eq. (1) below are minimized:

$$R_F = R_{0F} + A_{F/FAN} * W_{FAN} + A_{F/LPT} * W_{LPT}$$
$$R_R = R_{0R} + A_{R/FAN} * W_{FAN} + A_{R/LPT} * W_{LP}T$$

where

$R_F$ is the response vector vibration signal measured at the front accelerometer after balancing at a predetermined rotational speed;

$R_R$ is the response vector vibration signal measured at the rear accelerometer after balancing at a predetermined rotational speed;

$R_{0F}$ is the response vector vibration signal measured at the front accelerometer before balancing at a predetermined rotational speed;

$R_{0R}$ is the response vector vibration signal measured at the front accelerometer before balancing at a predetermined rotational speed;

$W_{FAN}$ is the balance weight moment at the fan;

$W_{LPT}$ is the balance weight moment at the last set of blades of the low pressure turbine; and

$A_{F/FAN}$ is the response vector measured at the front accelerometer due to a unit moment weight installed on the fan balance ring at zero degrees;

$A_{F/LPT}$ is the response vector measured at the front accelerometer due to a unit moment weight installed on the last set of blades of the low pressure turbine at zero degrees;

$A_{R/FAN}$ is the response vector measured at the rear accelerometer due to a unit moment weight installed on the fan balance ring at zero degrees; and

$A_{R/LPT}$ is the response vector measured at the front accelerometer due to a unit moment weight installed on the last set of blades of the low pressure turbine at zero degrees.

$R_F$, $R_{0F}$, $R_R$, and $R_{0R}$ are in the form of vectors having a magnitude and phase. The magnitude is mils and the phase is in degrees. $W_{FAN}$ and $W_{LPT}$ are also vectors having a magnitude and a phase, with magnitude expressed as ounce-inches and phase in degrees. $A_{F/FAN}$, $A_{F/LPT}$, $A_{R/FAN}$, and $A_{R/LPT}$ are empirically derived values that are typically provided by the engine manufacturers. The magnitude is expressed in mils per ounce-inches and phase is in degrees. As noted above, the mass of the balance weights can only be one of a finite number of predetermined discrete value. Further, the location of the balance weights likewise can only occupy discrete phase angles. In the case of the fan balance ring 107, each hole 108 is assigned a phase angle that is relative to the magnetic marker 118. Similarly, in the case of the last set of blades 112, each blade is assigned a phase angle that is relative to the magnetic marker 118. Therefore, $W_{FAN}$ and $W_{LPT}$ can only take certain finite values of weight and phase angle. By exhaustively calculating $R_F$ and $R_R$ for every possible combination of $W_{FAN}$ and $W_{LPT}$ vectors in Eq. (1) at the desired predetermined rotational speed, it is possible to determine which combination of $W_{FAN}$ and $W_{LPT}$ would serve to minimize $R_F$ and $R_R$, and thus, the vibration at the front and rear accelerometers.

Returning to FIGURE 3, the airborne vibration monitor 11 is connected to the on-board maintenance system 14. The connection is made via an ARINC 629 data bus 16. The ARINC 629 data bus 16 is a serial data communications link used extensively in aircraft applications. Further information regarding the ARINC 629 data bus may be found in "Multi-Transmitter Data Bus -- Part 1, Technical Description, ARINC Specification 629," Airlines Electronic Engineering Committee, Aeronautical Radio, Inc. (March 1990). Once the balance solution has been calculated by microprocessor 17a, the balance solution is transferred via the ARINC 629 data bus 16 to the OMS 14. The OMS 14 includes a maintenance access terminal (MAT) 51. MAT 51 acts as an interface to display the balance solution to a technician or mechanic who may then actually implement the balance solution by applying the weights to the engine.

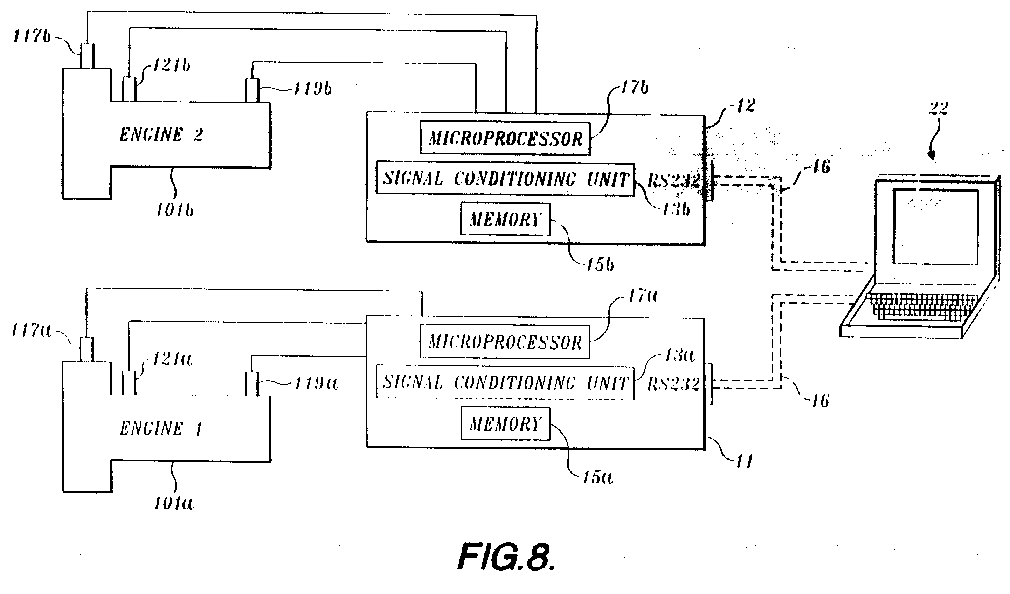

In an alternative embodiment of the present invention shown in FIGURE 8, the airborne vibration monitor 11 does not calculate the balance solution, but merely stores the vibration signals. The airborne vibration monitor is equipped with a communications port, preferably a RS 232 serial port. In order to balance the engine, after the aircraft has landed, a technician may carry on-board the aircraft a portable computer 22. The technician may then transfer the vibration signals from the memory 15 to the portable computer 22 via the RS 232 serial port. The balance solution may then be calculated by the portable computer 22.

While the preferred embodiment of the invention has been illustrated and described, it will be appreciated that various changes can be made therein without departing from the spirit and scope of the invention. For example, while the detailed description has detailed balancing methods in a high-bypass engine, it can be appreciated that other types of engines may be balanced using the present invention. Thus, the invention can be practiced otherwise than is specifically described herein.

**Claims**

1. A system for gathering vibration data from an aircraft engine during in-flight operation of said aircraft engine, said vibration data suitable for use in calculating the appropriate balance weights to be applied to said aircraft engine to minimize engine vibration, said system comprising:

   at least one accelerometer disposed on said aircraft engine, said accelerometer producing said vibration data, said vibration data indicative of the engine vibration at the location of each of said accelerometer;

   a tachometer for providing a rotation signal indicative of the rotational speed of a rotating system of said aircraft engine; and

   an airborne vibration monitor for receiving and storing said vibration data provided by said accelerometer and said rotation signal provided by said tachometer.

2. The system of Claim 1 wherein said airborne vibration monitor includes a microprocessor and memory, said microprocessor storing said vibration data in said memory when said rotation signal is at a predetermined level.

3. The system of Claim 2 wherein said microprocessor stores said vibration data in said memory when said rotation signal is at one of a plurality of predetermined levels.

4. A system for calculating a balance solution from vibration data gathered from an aircraft engine during in-flight operation of said aircraft engine, said vibration data suitable for use in calculating the appropriate balance weights to be applied to said aircraft engine to minimize engine vibration, said system comprising:

   at least one accelerometer disposed on said aircraft engine, said accelerometer producing said vibration data, said vibration data indicative of the engine vibration at the location of each of said accelerometer;

a tachometer for providing a rotation signal indicative of the rotational speed of a rotating system of said aircraft engine; and

an airborne vibration monitor for receiving and storing said vibration data provided by said accelerometer and said rotation signal provided by said tachometer, said airborne vibration monitor including a signal conditioning unit for processing said vibration data and said rotation signal to provide vibration signals that including a magnitude portion and a phase portion.

5. The system of Claim 4 wherein said airborne vibration monitor includes a microprocessor and memory, said microprocessor storing said vibration signals in said memory when said rotation signal is at a predetermined level.

6. The system of Claim 5 wherein said microprocessor stores said vibration signals in said memory when said rotation signal is at one of a plurality of predetermined levels.

7. The system of Claim 4 wherein said microprocessor calculates a balance solution from said vibration signals in accordance with the exhaustive search method.

8. The system of Claim 7 further including an on-board maintenance system (OMS) communicatively connected to said airborne vibration monitor, said OMS including a maintenance access terminal (MAT), said MAT providing a visual indication of the balance solution calculated by said microprocessor.

9. The system of Claim 8 wherein said aircraft engine is a high-bypass engine with a fan disposed forwardly on said aircraft engine and a low pressure turbine disposed rearwardly on said aircraft engine, wherein a first accelerometer is disposed proximate to said fan and a second accelerometer is disposed proximate said low pressure turbine.

10. The system of Claim 4 wherein said airborne vibration monitor further includes a communications port for transferring said vibration signals.

11. An on-board engine balancing system for balancing an aircraft engine, said aircraft engine including a low-speed shaft, said system comprising:

a plurality of accelerometers located on said aircraft engine, each providing vibration data indicative of the acceleration of each of said accelerometers;

a tachometer disposed on said aircraft engine, said tachometer providing a rotation signal indicative of the rotational speed of said low-speed shaft;

an airborne vibration monitor for receiving said vibration data from said accelerometers and said rotation signal from said tachometer, said airborne vibration monitor including:

(i) a signal conditioning unit for providing a plurality of vibration signals including a magnitude portion and a phase portion, said vibration signals calculated from said vibration data and said rotation signal;

(ii) memory; and

(iii) a microprocessor for storing in said memory said vibration signals when said rotation signal is at a predetermined level and calculating a balance solution from said vibration signals; and

an on-board maintenance system that includes a display terminal for displaying said balance solution.

FIG.1.

FIG.2.

*FIG.3.*

FIG.4.

FROM REAR ACCELEROMETER

FROM FRONT ACCELEROMETER

FROM TACHOMETER

501

503

505

507

509

13a

AMPLIFIER

AMPLIFIER

CHARGE CONVERTER

CHARGE CONVERTER

INTEGRATOR

INTEGRATOR

INTEGRATOR

INTEGRATOR

ANALYZER

ANALYZER

```
                    ┌─────────────┐
                    │    START    │
                    └──────┬──────┘
                           ┊
                           ▼
              ┌─────────────────────┐
              │   RECALL SPEEDS     │
              │   AT WHICH TO       │      201
              │   RECORD DATA       │
              └──────────┬──────────┘
                         │
                         ▼
              ┌─────────────────────┐
      ┌──────▶│      MONITOR        │
      │       │      ROTATING       │      203
      │       │       SPEED         │
      │       └──────────┬──────────┘
      │                  │
      │                  ▼
      │            ╱─────────────╲
      │          ╱       IS        ╲        205
      │   NO   ╱  ROTATIONAL SPEED   ╲
      ◀───────  AT PREDETERMINED
      │        ╲       SPEED        ╱
      │          ╲       ?        ╱
      │            ╲─────┬──────╱
      │                  │ YES
      │                  ▼
      │       ┌─────────────────────┐
      │       │  STORE VIBRATION    │
      │       │ SIGNAL IN MEMORY,   │
      │       │  OVERWRITING OLD    │
      │       │ DATA IF NECESSARY   │    207
      │       └──────────┬──────────┘
      │                  │
      │                  ▼
      │            ╱─────────────╲
      │   NO     ╱      IS         ╲      209
      └─────────       FLIGHT
               ╲     COMPLETE     ╱
                 ╲      ?       ╱
                   ╲────┬─────╱
                        │ YES
                        ▼
             ┌─────────────────────┐
             │     COMPUTE         │
             │ BALANCE SOLUTION    │     211
             └──────────┬──────────┘
                        │
                        ▼
                 ┌─────────────┐
                 │     END     │
                 └─────────────┘
```

# FIG.5.

## ENGINE SPEED % OF N1

| | 50 FRONT | 50 REAR | 60 FRONT | 60 REAR | 70 FRONT | 70 REAR | 80 FRONT | 80 REAR | 90 FRONT | 90 REAR | 100 FRONT | 100 REAR |
|---|---|---|---|---|---|---|---|---|---|---|---|---|
| MAGNITUDE (MILS) | 1.4 | 1.8 | 1.6 | 1.7 | 1.2 | 1.4 | 1.6 | 1.1 | 1.8 | 1.7 | 1.2 | 1.7 |
| PHASE (DEGREES) | 165 | 119 | 172 | 212 | 265 | 282 | 314 | 345 | 324 | 360 | 356 | 16 |

## FIG.6.

EP 0 577 159 A1

## BALANCE SOLUTION

| FAN RING | | | | LOW PRESSURE TURBINE | | |
|---|---|---|---|---|---|---|
| | P/N | HOLE | | | P/N | BLADE NO. |
| ADD | P03 | 13 | | ADD | T01 | 10 |
| ADD | P02 | 8 | | ADD | T01 | 19 |
| ADD | P01 | 3 | | | | |

# FIG.7.

EP 0 577 159 A1

**FIG.8.**

EP 0 577 159 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|----------|-------------------------------------------------------------------------------|-------------------|-----------------------------------------------|
| X | US-A-4 510 809 (FILLION) | 1 | G01M1/28 |
| Y | summary | 2-6,8-11 | |
| | * claims 1-7; figures 1-3 * | | |
| | --- | | |
| Y | US-A-4 485 678 (FANUELE) | 3,5,6, 8-11 | |
| | * column 3, line 44 - column 4, line 66; claims 1,4; figures 1-3 * | | |
| | --- | | |
| Y | US-A-4 238 960 (CURTIS ET AL) | 2,4 | |
| | * column 1, line 32 - column 2, line 20; claim 1; figure 1 * | | |
| | ----- | | |
| | | | TECHNICAL FIELDS SEARCHED (Int. Cl.5) |
| | | | G01M |

The present search report has been drawn up for all claims

| Place of search | Date of completion of the search | Examiner |
|-----------------|----------------------------------|----------|
| THE HAGUE | 19 OCTOBER 1993 | MUCS A.A. |

EPO FORM 1503 03.82 (P0401)